(19) Europäisches Patentamt
European Patent Office
Office européen des brevets

(11) **EP 1 086 927 B1**

(12) **EUROPÄISCHE PATENTSCHRIFT**

(45) Veröffentlichungstag und Bekanntmachung des Hinweises auf die Patenterteilung:
**16.04.2008 Patentblatt 2008/16**

(51) Int Cl.:
*C01B 31/30* (2006.01)   *C01B 31/34* (2006.01)
*C01B 21/06* (2006.01)   *C01B 35/04* (2006.01)

(21) Anmeldenummer: **00120001.3**

(22) Anmeldetag: **14.09.2000**

(54) **Verfahren zur Herstellung sphäroidisierter Hartstoffpulver**

Process for the preparation of spheroidal hard material powder

Procédé de préparation de poudre sphéroidale de matériau dur

(84) Benannte Vertragsstaaten:
**DE FR GB**

(30) Priorität: **22.09.1999 DE 19945318**

(43) Veröffentlichungstag der Anmeldung:
**28.03.2001 Patentblatt 2001/13**

(73) Patentinhaber: **DURUM Verschleißschutz GmbH 47877 Willich (DE)**

(72) Erfinder:
- **Flurschütz, Walter, Dipl.-Ing.
  98597 Breitungen (DE)**
- **Horn, Rudi, Dipl.-Ing.
  98597 Breitungen (DE)**
- **Klein, Alexander, Dipl.-Ing.
  36448 Schweina (DE)**
- **Zakharian, Simon
  70197 Stuttgart (DE)**

(74) Vertreter: **Läufer, Martina et al
Gramm, Linns & Partner GbR,
Theodor-Heuss-Strasse1
38122 Braunschweig (DE)**

(56) Entgegenhaltungen:
**US-A- 5 194 237**

- **GRABIS, JANIS: "Nanosize nitride-based composite powders produced by ICP technique" EUROMAT 99, BIANNU. MEET. FED. EUR. MATER. SOC. (FEMS) (2000), MEETING DATE 1999, VOLUME 9, 267-272. EDITOR(S): RUEHLE, M.;GLEITER, H. PUBLISHER: WILEY-VCH VERLAG GMBH, WEINHEIM, GERMANY. , 2000, XP001040001**

- **LUTZENKIRCHEN-HECHT, DIRK ET AL: "EXAFS investigation of nanoparticles produced in a thermal plasma process" J. SYNCHROTRON RADIAT. (1999), 6(3), 722-724 , 1999, XP001034395**
- **ISHIGAKI TAKAMASA ET AL: "Thermal plasma treatment of titanium carbide powders: Part II. In-flight formation of carbon-site vacancies and subsequent nitridation in titanium carbide powders during induction plasma treatment" JOURNAL OF MATERIALS RESEARCH NOV 1996 MATERIALS RESEARCH SOCIETY, PITTSBURGH, PA, USA, Bd. 11, Nr. 11, November 1996 (1996-11), Seiten 2811-2824, XP001034396**
- **XIAOBAO FAN ET AL: "In-flight carburization of molybdenum disilicide powders by an induction plasma" JOURNAL OF THE AMERICAN CERAMIC SOCIETY, FEB. 1999, AMERICAN CERAMIC SOC, USA, Bd. 82, Nr. 2, Seiten 281-288, XP002181688 ISSN: 0002-7820**
- **XIAOBAO FAN ET AL: "In-flight nitridation of molybdenum disilicide powders by an induction plasma" JOURNAL OF THE AMERICAN CERAMIC SOCIETY OCT 1998 AMERICAN CERAMIC SOC, WESTERVILLE, OH, USA, Bd. 81, Nr. 10, Oktober 1998 (1998-10), Seiten 2517-2526, XP002181689**

## Beschreibung

Die Erfindung betifft das Gebiet der Hartstoffpulver, Hartmetallpulver und -granulate für die Herstellung von Hartmetallbeschichtungen. Es handelt sich hierbei um dichte sehr harte Werkstoffe, die bevorzugt in kugeliger Form auf Werkzeuge, z.B. auf Bohrwerkzeuge und -gestänge o.ä. aufgebracht werden und diesen Werkzeugen und -teilen eine hohe Verschleißfestigkeit und Zähigkeit gegenüber Reibung und Schlag verleihen.

Insbesondere bezieht sich die Erfindung auf sphäroidisierte Hartmetallpulver - auch allgemein darstellbar als $Me_xM_y$-Pulver - oder entsprechende Granalien, die zum Beschichten von Verschleißteilen u.ä. mittels Flammspritzen, Plasmaspritzen und verwandter Techniken aufgebracht werden. Dabei wird das vorgebildete Pulver z.B. in einem Gleichstromplasma auf die zu beschichtende Oberfläche gesprüht.

Nach einem klassischen Herstellungsverfahren für ein Beschichtungspulver im vorgenannten Sinne werden z.B. die folgenden Verfahrensschritte ausgeführt zum Beispiel M.F. BESSER et al. beschrieben in "Journal of Materials Synthesis and Processing" 4 (1995), Seiten 223-230:
Zunächst wird eine Grundmischung aus Hartmetallpulver (z.B. auf $WC/W_2C$-Basis) durch Mischen und Vermahlen der Komponenten hergestellt. Anschließend wird diese Mischung bei ca. 3000°C in eine weitgehend homogene Schmelze überführt. Nach Abkühlen dieser Schmelze wird das zusammengeschmolzene Hartmetall zerkleinert und gesiebt. Schließlich wird eine Fraktion mit vorgegbener feiner Korngröße unter nochmaligem Erhitzen gerundet (dies kann in einem Plasma geschehen) und nach abschließendem Erkalten für die Beschichtung verwendet.

Wie leicht zu erkennen, ist ds bekannte Verfahren bereits von der Anzahl der Arbeitsschritte her recht aufwendig. Zusätzlich ist dieses Verfahren energie- und kostenintensiv, was sich u.a. durch die Herstellung der Hochtemperaturschmelze und das anschließende Zerkleinern des Hartstoffes ergibt.

Aus der EP 0 687 650 A1 ist auch bereits ein Verfahren bekannt, das das vorgenannte Verfahren vereinfachen und verkürzen soll. Dabei wird der Hartstoff, z.B. Wolframkarbid, mittels Plasmaflamme in einem Tiegel erschmolzen. Die Verwendung einer Plasmaflamme bringt eine deutliche Verkürzung der Schmelzzeit mit sich. Nach der Herstellung der Hartstoffschmelze wird diese in einem definierten Schmelzestrahl auf eine schnell rotierende Abkühlscheibe geleitet. Die Abkühlscheibe wird mit sehr hoher Geschwindigkeit gedreht und dabei gekühlt, wodurch sehr feine Hartstoffkugeln entstehen. Durch dieses Verfahren entsteht ein Hartstoffgranulat bestimmter Qualität und mit bestimmtem Gefüge, auf das nur in sehr begrenztem Umfang Einfluß genommen werden kann. Das Bedürfnis nach neuen kostengünstig herzustellenden Hartmetall-Beschichtungspulvern bleibt daher bestehen.

Der Erfindung liegt die Aufgabe zugrunde, ein gut fließfähiges, dabei entmischungsfreies Pulver oder Granulat für die Hartstoff-Beschichtung, insbesondere von Verschleißteilen durch Plasmaspritzen, zur Verfügung zu stellen und für dessen Herstellung ein Verfahren zu entwickeln, das in möglichst wenigen Arbeitsschritten kosten- und energiegünstig durchgeführt werden kann.

Die erfindungsgemäße Lösung der vorstehenden Aufgabe erfolgt dadurch, daß bei einem Verfahren zur Herstellung sphäroidisierter Hartmetallpulver die folgenden Verfahrensschritte durchgeführt werden:

- Herstellen einer feinvermahlenen Hartstoffpulver-Grundgemenge, eines Granulats oder einer Suspension mit feinvermahlenem Hartstoffpulver, wobei das Gemenge das Granulat oder die Suspension so ausgewählt ist, daß unter den Bedingungen eines Hochfrequenzplasmas eine chemische Umsetzung zwischen den Hartstoff-Bestandteilen untereinander, mit dem Gas und/oder dem Suspensionsbildner und/oder eine Legierungsbildung eintritt;

- Einbringen des Pulvergrundmenges, des Granulats oder der Suspension mit einem Trägergasstrom in den Arbeits gasstrom eines induktiv gekoppeltes Hochfrequenzplasmas (ICP),

  - wodurch die vorgenannten Reaktions- oder Legierungsvorgänge mit der Bildung sphäroidisierter Hartmetallteilchen in einem Schritt erfolgt.

Das Herstellen des Gemenges erfolgt zunächst in an sich bekannter Weise. Hierfür werden die Bestandteile des für die spätere Beschichtung gewünschten Hartstoffes oder Ausgangsstoffe für diesen Hartstof, die später in dem Verfahren mit einem Reaktivgas innerhalb des Plasmas umgesetzt werden, vermischt und feinvermahlen, z.B. in einem Attritor.

Das Gemenge kann entweder direkt in einer Suspension verwendet oder zusätzlich fein granuliert werden, z.B. in einer Sprühtrocknung mit ggf. nachfolgender Ausgasung. Aus dem Hartstoffpulver kann auch eine Suspension hergestellt werden, beispielsweise mit einem Kohlenwasserstoff hergestellt werden, der mit den Pulverkomponenten im Plasma reagiert.

Das so hergestellte Gemenge in Pulver- Granulat- oder Suspensionsform wird dann innerhalb eines Trägergasstroms in das Arbeitsgas eines thermisch, induktiv gekoppeltes Hochfrequenzplasmas (ICP) eingebracht. Hierzu wird das oben angegebene Hartstoff-Gemenge mit dem Trägergasstrom durch den Plasmabogen des HF-Plasmas geblasen.

Vorrichtungen zur Erzeugung eines ICP-Plasmas sind als solche bekannt und könne verwendet werden, so daß sich eine Beschreibung geeigneter Apparaturen an dieser Stelle erübrigt.

Die nach Durchgang durch das Plasma sphäroidisierten Teilchen kühlen sich in einem zusätzlichen Quench-Gasstrom mit hoher Geschwindigkeit unterhalb der Rekristallisationstemperatur ab und werden hinter dem Plasma aufgefangen. Der Quench-Gasstrom ist ein i.a. inerter zusätzlicher Kühlgasstrom, der dem System gesondert zugeführt wird.

Besonders vorteilhaft bei der Erfindung ist die extrem kompakte Verfahrensführung. Da sowohl die Reaktion der Komponenten untereinander, die Legierungsbildung wie auch die Sphäroidisierung in einem Schritt innerhalb des Plasmas erfolgt, entfällt der gesonderte Schritt des Verschmelzens der Ausgangsstoffe und damit ggf. auch die Folgeschritte Zerkleinern, Sieben, Runden des Schmelzprodukts. Der Ablauf des Verfahrens wird sehr vereinfacht und abgekürzt. Das Verfahren arbeitet daher sehr energie- und kostengünstig.

Erhalten wird ein sphärisches Hartstoffpulver, das homogen in seiner Zusammensetzung ist und ein gutes Fließverhalten bei der Verarbeitung im Beschichtungsauftrag zeigt. Unter einem "sphäroidisierten Hartstoffpulver" wird dabei ein Pulver aus einer Hartstofflegierung mit vollständig abgerundeten Teilchenkanten verstanden.

Das erfindungsgemäß erhaltene sphärodische Granulat besitzt den Vorteil einer gegenüber mit anderen Verfahren hergestellten Granulaten gleichmäßigere Struktur und Kugelform der einzelnen Teilchen. Mit dem erfindungsgemäßen Verfahren ist es möglich, die Partikelgrößenverteilung in relativ engen und einstellbar verschiedenen Größenklassen herzustellen.

Unter einem Hartstoff oder einer Hartstofflegierung im Sinne der Erfindung wird im engeren Sinne eine Verbindung der Form $Me_xM_y$ verstanden, wobei Me ein Metall und M ein Metalloid ist (die Formel ist so zu verstehen, daß verschiedene Metalle und Metalloide verbunden sein können). Im einzelnen versteht man daher unter "metallischen Hartstoffen" chemische Verbindungen der Übergangsmetalle der Gruppe IVa bis VIa des Periodensystems mit den keinatomigen Elementen Kohlenstoff, Stickstoff, Bor und Silizium, d.h. die Karbide, Nitride, Karbonitride, Boride und Silizide der Metalle Titan, Zirkonium, Hafnium, Vanadin, Niob, Tantal, Chrom Molybdän und Wolfram und deren Gemische.

Bevorzugt im Sinne der Erfindung ist das Legierungssystem $(w_2c)_{0,5+z}(WC)_{0,5-z}$ mit (z<0,5) mit hoher Zähigkeit und einer hohen Vickershärte von größer 2000.

Die Ausgangsbestandteile für die Hartmetallpulver-Grundmischung können dabei insbesondere eine der folgenden Gruppen umfassen:

a) $W_2C + WC$
b) $WC + W$
c) $W + C$
d) $W + C_nH_{2n+2}$
e) W + sonstige

Die Ausgangsstoffe können als Metalle oder Metalloxide oder als vorgebildete Legierungen zwischen bestimmten Einzelbestandteilen vorliegen.

Für die Aufrechterhaltung des ICP-Plasmas ist außer dem Arbeits- und Hüllgasstrom erforderlich. In diesem Gasstrom wird ein Trägergasstrom für das Einblasen der Grundmischung in Pulver-, Granulat- oder Suspensionsform, sowie zum schnellen Kühlen der Partikel nach dem Plasma ein sog. Quenchgasstrom benötigt.

Neben einer Reaktion zwischen den Hartstoffausgangsstoffen kann daher zusätzlich eine Reaktion mit dem Arbeits- und/oder Trägergas stattfinden, sofern dies nicht ein in Bezug auf die Bestandteile der Grundmischung inertes Gas, z.B. ein Edelgas, vorzugsweise Argon ist.

Wird ein Reaktivgas verwendet, kann dies beispielsweise so gewählt sein, daß es unter den Bedingungen des Plasmas mit Metallen oder Metalloxiden der Grundgemengebestandteile Karbide bildet - bevorzugt ist in diesem Fall Methan - oder Nitride bildet - bevorzugt ist hierfür Stickstoff.

Die Reaktionen zwischen den Grundgemengebestandteilen un dem Reaktivgas können u.a. durch die folgenden prinzipiellen Formeln wiedergegeben werden:

$$aW + bCH_4 \rightarrow c(W_2C)_{0,5+z}(WC)_{0,5-z} + dH_2$$

$$aTi + bN_2 \rightarrow cTiN$$

$$aTa_2O_5 + bCH_4 \rightarrow c(TaC)_x(Ta_2C)_y + dH_2O$$

Vorzugsweise wird das thermische, induktiv gekoppelte HF-Plasma bei einer Temperatur über 3000°C, weiter vorzugsweise über 4000°C betrieben. Das hohe induktive Feld wirkt im allgemeinen beschleunigend auf die Reaktionsgeschwindigkeit und positiv auf das Reaktionsgleichgewicht bei der Bildung von $W_2C/WC$.

Die durch das HF-Plasma geblasene abreagierte Grundmischung wird vorzugsweise bei Abkühlgeschwindigkeiten größer $10^4$ k/s gequencht.

Im folgenden wird die Erfindung anhand von Beispielen näher erläutert.

Beispiel 1

Herstellung eines Ausgangsgemenges durch Mahlmischen eines Gemenges von 70 % WC + 30 W ca. 3 h im Attritor unter Alkohol und Zugabe von ca. 1 % organischem Binder. Sprühtrocknung zu vorgebildetem Granulat mit entsprechend gewünschter Korngröße, ggf.

Ausgasen und Vorsintern des Granulats. Aussiebung gewünschter Fraktionen. Durchschicken der Granulate mittels Trägergasstrom ins Innere eines nicht in die Reaktion eingehenden Gases, vorzugsweise Ar bei Ar-betriebenem Plasma (ICP). Quenchen mit einem nach dem Plasma zugeführten Gasstrom, vorzugsweise $N_2$. Auffangen des fertigen Pulvers in einer Schutzgasatmosphäre.

Beispiel 2

Die Verarbeitung geschieht wie unter Beispiel 1 beschrieben; es werden 96 % W + 4,5 % Ruß eingesetzt.

Beispiel 3

Herstellung eines Wolfram-Granulates wie unter Beispiel 2 beschrieben und Durchschicken der Granulate in das Innere eines mit in die Reaktion eingehenden Gases, eines vorzugsweise mit CH4 betriebenen thermischen Plasmas (ICP). Auffangen und Kühlen wie unter 1 Beispiel beschrieben.

Beispiel 4

Die Verarbeitung geschieht wie unter Beispiel 1 beschrieben:

Es werden 82 % $WO_3$ und 18 % C Ruß eingesetzt.

**Patentansprüche**

1. Verfahren zur Herstellung sphäroidisierter Hartstoffpulver umfassend folgende Verfahrensschritte:

   - Herstellen einer feinvermahlenen Hartstoffpulver-Grundmischung, eines Granulats oder einer Suspension mit feinvermahlenem Hartstoffgemenge, wobei das Grundgemenge das Granulat oder die Suspension so ausgewählt ist, daß unter den Bedingungen eines Hochfrequenzplasmas eine chemische Umsetzung zwischen den Hartstoffbestandteilen untereinander, mit dem Gas und/oder dem Suspensionsbildner und/oder eine Legierungsbildung eintritt;
   - Einbringen des Pulvergrundgemenges, des Granulats oder der Suspension mit einem Trägergasstrom in den Arbeitsgasstrom eines thermischen, induktiv gekoppelten Hochfrequenzplasmas (ICP),

   - wodurch die vorgenannten Reaktions- oder Legierungsvorgänge mit der Bildung sphäroidisierter Hartstoffpulver in einem Schritt erfolgen.

2. Verfahren nach Anspruch 1, **dadurch gekennzeichnet, daß** die Ausgangsbestandteile für das Hartstoffgemenge eine der folgenden Gruppen umfassen:

   a) $W_2C + W$
   b) WC + W
   c) W + C
   d) $W + C_nH_{2n+2}$
   e) W + sonstige

3. Verfahren nach Anspruch 1 **dadurch gekennzeichnet, daß** ein oder mehrere metallische Reaktanden als Oxide oder Metalloid-Verbindungen vorliegen.

4. Verfahren nach Anspruch 2 oder 3, **dadurch gekennzeichnet, daß** die durch das Verfahren erzeugte Legierung eine zweiphasige, heterogene $W_2C/WC$-Legierung der allgemeinen Zusammensetzung $(W_2C)_{0,5+z}(WC)_{0,5-z}$ mit $z<0,5$ ist.

5. Verfahren nach einem der Ansprüche 1 bis 4, **dadurch gekennzeichnet, daß** das Arbeits- und/oder Trägergas in Bezug auf die Bestandteile des Gemenges ein Inertgas ist.

6. Verfahren nach Anspruch 5, **dadurch gekennzeichnet, daß** das Inertgas ein Edelgas ist, vorzugsweise Argon.

7. Verfahren nach einem der Ansprüche 1 bis 4, **dadurch gekennzeichnet, daß** das mind. eines der Gase in Bezug auf die Bestandteile der Grundmischung ein Reaktivgas ist.

8. Verfahren nach Anspruch 7, **dadurch gekennzeichnet, daß** das Reaktivgas ein unter den Bedingungen des Plasmas mit Metallen oder Metalloxiden als Grundgemengebestandteilen Karbide bildendes Gas ist, vorzugsweise Methan.

9. Verfahren nach Anspruch 7, **dadurch gekennzeichnet, daß** das Reaktivgas ein unter den Bedingungen des Plasmas mit Metallen oder Metalloxiden als Grundgemengebestandteilen Nitride bildendes Gas ist, vorzugsweise Stickstoff.

10. Verfahren nach einem der Ansprüche 1 bis 9, **dadurch gekennzeichnet, daß** das HF-Plasma eine Temperatur von über 3000°C, vorzugsweise über 4000°C besitzt.

11. Verfahren nach einem der Ansprüche 1 bis 10, **dadurch gekennzeichnet, daß** das durch das HF-Plasma geblasene Grundgemenge oder die Suspension hiermit nach Durchtritt durch den Plasmabogen bei Abkühlgeschwindigkeiten größer $10^4$ K/s gequencht wird.

## Claims

1. Process for producing spheroidized hard material powder comprising the following process steps:

   - producing a finely ground hard material powder base mixture, a granulate or a suspension comprising finely ground hard material powder, the base mixture, the granulate or the suspension being selected so that under conditions of a high-frequency plasma there ensues a chemical reaction between the hard material constituents, with the gas and/or with the suspension former and/or an alloy formation;
   - introducing the powder base mixture, the granulate or the suspension with a carrier gas stream into the working gas stream of a thermal, inductively coupled, high-frequency plasma (ICP),
   - whereby the aforementioned reaction or alloying processes occur with the formation of spheroidized hard material powder in one step.

2. Process according to Claim 1, **characterized in that** the starting constituents for the hard material mixture comprise one of the following groups:

   a) $W_2C + W$
   b) $WC + W$
   c) $W + C$
   d) $W + C_nH_{2n+2}$
   e) $W$ + miscellaneous

3. Process according to Claim 1, **characterized in that** one or more metallic reactants are present as oxides or metalloid compounds.

4. Process according to Claim 2 or 3, **characterized in that** the alloy produced by the process is a two-phase, heterogeneous $W_2C/WC$ alloy of the general composition $(W_2C)_{0.5+z}(WC)_{0.5-z}$ where $z < 0.5$.

5. Process according to any one of Claims 1 to 4, **characterized in that** the working and/or carrier gas is an inert gas in relation to the constituents of the mixture.

6. Process according to Claim 5, **characterized in that** the inert gas is a noble gas, preferably argon.

7. Process according to any one of Claims 1 to 4, **characterized in that** at least one of the gases is a reactive gas in relation to the constituents of the base mixture.

8. Process according to Claim 7, **characterized in that** the reactive gas is a gas which combines with metals or metal oxides as base mixture constituents under the conditions of the plasma to form carbides, and preferably is methane.

9. Process according to Claim 7, **characterized in that** the reactive gas is a gas which combines with metals or metal oxides as base mixture constituents under the conditions of the plasma to form nitrides, and preferably is nitrogen.

10. Process according to any one of Claims 1 to 9, **characterized in that** the HF plasma has a temperature of above 3000°C, preferably above 4000°C.

11. Process according to any one of Claims 1 to 10, **characterized in that** the base mixture blown through the HF plasma, or the suspension therewith, is quenched at cooling rates greater than $10^4$ K/s after passage through the plasma arc.


**Revendications**

1. Procédé pour la préparation d'une poudre de produit dur sphéroïdisée comprenant les étapes opératoires suivantes :

   - préparation d'un mélange de base de poudre de produit dur finement moulu, de granules ou d'une suspension d'un mélange de poudre de produit dur finement moulé dans le lequel le mélange des granules ou de la suspension est choisi de telle sorte que sous l'effet d'un plasma haute fréquence, une transformation chimique est générée entre les constituants du produit dur les uns par rapport aux autres, avec du gaz et/ou l'agent de formation de la suspension et/ou une formation d'alliage,
   - introduction du mélange de poudre de base, de granules ou de la suspension avec un courant gaz porteur dans le courant gazeux de travail d'un plasma haute-fréquence, couplé inductivement et thermique (ICP),
   - à la suite de quoi, les réactions ou le processus de formation d'alliage précités engendrent la formation en une étape de poudre de produit dur sphéroïdisée.

2. Procédé selon la revendication 1, **caractérisé en ce que** les constituantes initiaux du mélange de produit dur comprennent l'un des groupes suivants :

   a) $W_2C + W$
   b) $WC + W$
   c) $W+C$
   d) $W + C_nH_{2n}+_2$
   e) $W$ + annexes

3. Procédé selon la revendication 1, **caractérisé en ce qu'**un ou plusieurs réactifs sont présents sous forme d'oxydes ou de composés de métalloïdes.

4. Procédé selon la revendication 2 ou 3, **caractérisé en ce que** l'alliage obtenu selon le procédé est un alliage $W_2C/WC$ hétérogène à deux phases ayant la composition générale

$$(W_2C)_{0,5+z}(WC)_{0,5-z} \text{ avec } z<0,5.$$

5. Procédé selon l'une des revendications 1 à 4, **caractérisé en ce que** le gaz de travail et/ou le gaz porteur est un gaz inerte compte-tenu des constituants du mélange.

**6.** Procédé selon la revendication 5, **caractérisé en ce que** le gaz inerte est un gaz rare, de préférence de l'argon.

**7.** Procédé selon l'une des revendications 1 à 4, **caractérisé en ce qu'**au moins l'un des gaz est un gaz réactif compte-tenu des constituants du mélange de base.

**8.** Procédé selon la revendication 7, **caractérisé en ce que** le gaz réactif est un gaz formateur de carbure, de préférence du méthane avec des métaux ou des oxydes métalliques en tant que constituants du mélange de base, sous l'effet du plasma.

**9.** Procédé selon la revendication 7, **caractérisé en ce que** le gaz réactif est un gaz formateur de nitrure, de préférence de l'azote, avec des métaux ou des oxydes métalliques en tant que constituants du mélange de base, sous l'effet du plasma.

**10.** Procédé selon l'une des revendications 1 à 9, **caractérisé en ce que** le plasma HF présente une température supérieure à 3000°C, de préférence supérieure à 4000°C.

**11.** Procédé selon l'une des revendications 1 à 10, **caractérisé en ce que** le mélange de base soufflé à travers le plasma HF ou la suspension après traversée de l'arc de plasma est refroidi à une vitesse de refroidissement supérieure à $10^4$ K/s.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0687650 A1

**In der Beschreibung aufgeführte Nicht-Patentliteratur**

- **M.F. BESSER et al.** *Journal of Materials Synthesis and Processing,* 1995, vol. 4, 223-230